(19) **Europäisches Patentamt / European Patent Office / Office européen des brevets**

(11) **EP 4 704 172 A1**

(12) **EUROPEAN PATENT APPLICATION**
published in accordance with Art. 153(4) EPC

(43) Date of publication:
**04.03.2026 Bulletin 2026/10**

(21) Application number: **24796893.6**

(22) Date of filing: **17.04.2024**

(51) International Patent Classification (IPC):
*H01M 4/134* (2010.01)    *H01M 4/40* (2006.01)
*H01M 4/66* (2006.01)    *H01M 10/052* (2010.01)
*H01M 50/449* (2021.01)    *H01M 50/463* (2021.01)

(52) Cooperative Patent Classification (CPC):
Y02E 60/10

(86) International application number:
**PCT/JP2024/015310**

(87) International publication number:
**WO 2024/225140 (31.10.2024 Gazette 2024/44)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **27.04.2023 JP 2023073629**

(71) Applicant: **Panasonic Intellectual Property Management Co., Ltd.**
**Kadoma-shi, Osaka 571-0057 (JP)**

(72) Inventors:
• ISHII, Kiyohiro
  Kadoma-shi, Osaka 571-0057 (JP)
• KANO, Akira
  Kadoma-shi, Osaka 571-0057 (JP)
• UCHIYAMA, Yohei
  Kadoma-shi, Osaka 571-0057 (JP)

(74) Representative: **Novagraaf International SA**
**Chemin de l'Echo 3**
**1213 Onex, Geneva (CH)**

(54) **NEGATIVE ELECTRODE FOR LITHIUM SECONDARY BATTERY, AND LITHIUM SECONDARY BATTERY**

(57)    The disclosed negative electrode (12) for a lithium secondary battery includes a current collector (12a) containing copper and an Mg-containing lithium alloy layer (12b) disposed on the current collector (12a). An intermetallic compound of copper and magnesium is present at the interface between the current collector (12a) and the Mg-containing lithium alloy layer (12b).

*FIG. 2*

EP 4 704 172 A1

## Description

[Technical Field]

The present disclosure relates to a negative electrode for a lithium secondary battery and a lithium secondary battery.

[Background Art]

Lithium secondary batteries (also referred to as lithium metal secondary batteries), in which lithium metal is used as a negative electrode active material, have high theoretical capacity densities. In a lithium secondary battery, lithium metal is deposited on a negative electrode current collector during a charging process, and the lithium metal deposited during the charging process dissolves in a nonaqueous electrolyte during a discharging process. In a lithium secondary battery, a negative electrode containing a lithium alloy is used in some cases. Conventionally, various proposals have been made regarding a negative electrode of a nonaqueous electrolyte secondary battery.

Claim 1 of Patent Literature 1 (JP 2018-63872A) describes a "lithium-ion secondary battery comprising: a negative electrode current collector foil; and a negative electrode active material layer formed on the negative electrode current collector foil, wherein the negative electrode active material layer contains a graphite-based negative electrode active material, the negative electrode current collector foil is copper foil having a copper alloy coating formed on its surface, the copper alloy coating is higher in volume resistivity than copper, and the copper alloy coating is lower in thermal conductivity than copper".

Claim 1 of Patent Literature 2 (JP 2014-120399A) discloses an "electrode comprising: an active material-containing layer; and a current collector including, on its surface, a first region that does not support the active material-containing layer and has a surface roughness of $Ra_1$ and a second region that supports the active material-containing layer and has a surface roughness of $Ra_2$, the surface roughness $Ra_1$ of the first region being smaller than the surface roughness $Ra_2$ of the second region".

[Citation List]

[Patent Literatures]

   PTL 1: Japanese Laid-Open Patent Publication No. 2018-63872
   PTL 2: Japanese Laid-Open Patent Publication No. 2014-120399

[Summary of Invention]

[Technical Problem]

It has been proposed to use a negative electrode including a lithium alloy layer as a negative electrode for a lithium secondary battery. However, the present inventors have found that the use of a negative electrode including a lithium alloy layer may result in a decrease in cycle characteristics. An object of the present disclosure is to provide a negative electrode including a lithium alloy layer containing magnesium, which can be used to manufacture a lithium secondary battery with favorable cycle characteristics.

[Solution to Problem]

One aspect of the present disclosure relates to a negative electrode for a lithium secondary battery. The negative electrode for a lithium secondary battery includes a current collector containing copper and a lithium alloy layer disposed on the current collector, the lithium alloy layer contains magnesium, and an intermetallic compound of copper and magnesium is present at the interface between the current collector and the lithium alloy layer.

Another aspect of the present disclosure relates to a lithium secondary battery. The lithium secondary battery includes a positive electrode, a negative electrode, a separator interposed between the positive electrode and the negative electrode, and a nonaqueous electrolyte. The negative electrode is a negative electrode for a lithium secondary battery according to the present disclosure, lithium metal is deposited during charging, and the lithium metal dissolves during discharging.

[Advantageous Effects of Invention]

According to the present disclosure, it is possible to obtain a negative electrode including a magnesium-containing lithium alloy layer, which can be used to manufacture a lithium secondary battery with favorable cycle characteristics.

While novel features of the present invention are set forth particularly in the appended claims, the present invention, both as to organization and content, will be better understood and appreciated, along with other objects and features thereof, from the following detailed description taken in conjunction with the drawings.

[Brief Description of Drawings]

[FIG. 1] A longitudinal cross-sectional view schematically showing a lithium secondary battery according to an embodiment of the present disclosure.
[FIG. 2] A cross-sectional view schematically showing a negative electrode according to an embodiment of the present disclosure.
[FIG. 3A] A top view schematically showing an example of a separator on which spacers are formed.
[FIG. 3B] A view schematically showing a cross section taken along line IIIA-IIIA in FIG. 3A.
[FIG. 4] An image showing an example of an X-ray diffraction pattern measured in examples.
[FIG. 5] An image showing evaluation results in the examples.

[Description of Embodiments]

Although embodiments according to the present disclosure will be described below using examples, the present disclosure is not limited to the examples described below. Although specific numerical values and materials may be mentioned as examples in the following description, other numerical values and other materials may be applied as long as effects of the present disclosure can be obtained. The term "range of numerical value A to numerical value B" used in this specification includes the numerical value A and the numerical value B, and can be read as "range of numerical value A or more to numerical value B or less". In the following description, when lower limits and upper limits of numerical values regarding specific physical properties, conditions, or the like are given as examples, any of the above-mentioned lower limits and any of the above-mentioned upper limits can be combined as desired, as long as the lower limit is not greater than or equal to the upper limit. In the following description, when examples of constituent elements or methods are listed, unless otherwise specified, only one of the listed examples may be used, or two or more of the listed examples may be used in combination.

(Negative Electrode for Lithium Secondary battery)

A negative electrode according to the present embodiment may be referred to as "negative electrode (N)" hereinafter. The negative electrode (N) is a negative electrode for a lithium secondary battery. The negative electrode (N) includes a current collector containing copper and a lithium alloy layer disposed on the current collector. The lithium alloy layer contains magnesium. An intermetallic compound of copper and magnesium is present at the interface between the current collector and the lithium alloy layer.

Hereinafter, the lithium alloy layer containing magnesium may be referred to as an "Mg-containing Li alloy layer". The Mg-containing Li alloy layer may contain elements other than lithium (Li) and magnesium (Mg).

The use of a negative electrode containing an Mg-containing Li alloy layer has an advantage of reducing the deterioration of cycle characteristics due to the formation of an SEI film as described later. However, the present inventors have found that the use of a negative electrode including an Mg-containing Li alloy layer can sometimes result in a deterioration of cycle characteristics. Their investigation has revealed that the deterioration of cycle characteristics may be due to poor adhesion between the Mg-containing Li alloy layer and the current collector. Because the Mg-containing Li alloy layer is hard, repeated deposition and dissolution of metal to the negative electrode can be considered to reduce the adhesion between the Mg-containing Li alloy layer and the current collector. After further investigation, the present inventors have found that good cycle characteristics can be achieved by interposing a specific intermetallic compound between the Mg-containing Li alloy layer and the current collector. The present disclosure is based on the new finding.

The Mg-containing Li alloy layer is formed on at least one of the two surfaces of the negative electrode (N) that faces the positive electrode. In a case where both surfaces of the negative electrode (N) face the positive electrode, an example of the negative electrode (N) has a laminated structure of Mg-containing Li alloy layer/intermetallic compound layer/current collector/intermetallic compound layer/Mg-containing Li alloy layer. In a case where only one surface of the negative electrode (N) faces the positive electrode, an example of the negative electrode (N) has a laminated structure of current collector/intermetallic compound layer/Mg-containing Li alloy layer.

The intermetallic compound may be $Cu_2Mg$. In this case, in an X-ray diffraction pattern obtained by X-ray diffraction analysis, a ratio Icm/Ic of a peak intensity Icm of (111) plane of the intermetallic compound ($Cu_2Mg$) to a peak intensity Ic of (111) plane of Cu may be in the range of 0.005 to 0.095. The ratio Icm/Ic may be 0.0007 or more, 0.005 or more, 0.0086 or more, 0.0191 or more, 0.0305 or more, or 0.0457 or more, and may also be 0.1037 or less, 0.0958 or less, 0.095 or less, 0.075 or less, 0.0457 or less, 0.0305 or less, or 0.0191 or less. The ratio Icm/Ic may be in the range of 0.0007 to 0.1037, the range of 0.005 to 0.1037, the range of 0.0086 to 0.1037, the range of 0.0191 to 0.1037, the range of 0.0305 to 0.1037, or the range of 0.0457 to 0.1037. In these ranges, the upper limit may be 0.0958, 0.095, 0.075, 0.0457, 0.0305, or 0.0191, as long as the lower limit is not greater than or equal to the upper limit.

The thickness of the Mg-containing Li alloy layer may be 5 $\mu$m or more, or 10 $\mu$m or more, and may also be 50 $\mu$m or less, or 100 $\mu$m or less. The intermetallic compound between the Mg-containing Li alloy layer and the current collector may be formed in the form of particles or layers.

The Mg content in the Mg-containing Li alloy layer may be 0.5 mass% or more, 1.0 mass% or more, 3.0 mass% or more, 5.0 mass% or more, and may be 10 mass% or less, 15 mass% or less, 20 mass% or less, or 30 mass% or less.

The Mg-containing Li alloy layer may be an alloy layer made of lithium (Li) and magnesium. Alternatively, the Mg-containing Li alloy layer may contain metal elements other than lithium and magnesium. Examples of other metal elements include aluminum, indium, copper, zinc, potassium, calcium, sodium, silver, gold, and the like. The content of the other metal elements may be 5% by mass or less (for example, 1% by mass or less).

The current collector (negative electrode current collector) contains copper. At least the surface of the current collector is made of a metal-containing copper. The copper-containing metal may be copper, or may also be a copper alloy. The content of elements other than copper contained in the copper alloy is small, for example, 30 mass % or less (for example, 10 mass% or less). Examples of elements other than copper include zinc, tin, aluminum, beryllium, nickel, iron, manganese, and the like.

The current collector may be a copper foil or a copper alloy foil. The copper alloy may also be any of the above-mentioned copper alloys. The thickness of the foil may be 5 $\mu$m or more, or 7 $\mu$m or more, and may also be 15 $\mu$m or less, or 30 $\mu$m or less.

The current collector may include a substrate and a metal layer disposed on the substrate. The metal layer contains copper. The substrate may be formed of stainless steel or a resin. This configuration particularly prevents breakage of the current collector. The copper-containing metal layer may be formed of copper or a copper alloy. The copper alloy may be the copper alloy described above. The resin of the substrate is not particularly limited, but a resin that is less susceptible to deterioration in the battery is preferably used. Examples of the resin include polyethylene, polypropylene, polyethylene terephthalate, polyimide, polyamide, polyurethane, and the like.

The thickness of the substrate may be 5 $\mu$m or more, or 10 $\mu$m or more, and may be 20 $\mu$m or less, or 50 $\mu$m or less. The thickness of the metal layer may be 0.1 $\mu$m or more, or 0.5 $\mu$m or more, and may be 2 $\mu$m or less, or 5 $\mu$m or less.

The negative electrode (N) may contain a second negative electrode active material other than lithium (first negative electrode active material) as necessary. Examples of the second negative electrode active material include Si-containing materials (silicon, silicon oxide, and the like), Sn-containing materials (tin, tin oxide, and the like), and carbonaceous materials (graphite, soft carbon, hard carbon, amorphous carbon, and the like). The second negative electrode active material is capable of reversibly absorbing and desorbing lithium. The negative electrode (N) may contain only one or more of these second negative electrode active materials. The negative electrode (N) may include a layer containing the second negative electrode active material. The layer containing the second negative electrode active material may contain at least one selected from the group consisting of a binder, a conductive material, a thickener, and an additive as necessary. These components may be selected from the components described above for the positive electrode. However, more than half of the capacity of the negative electrode (N) is due to the deposition and dissolution of lithium metal. In an example, the negative electrode (N) does not include the second negative electrode active material.

(Method for Manufacturing Negative Electrode (N))

A manufacturing method (M), which is an example of a method for manufacturing the negative electrode (N), will be described below. However, the negative electrode (N) may also be manufactured by a method other than the method described below. The matters described for the negative electrode (N) can be applied to the manufacturing method below, so duplicated descriptions will be omitted. Furthermore, the matters described for the manufacturing method below may also be applied to the negative electrode (N).

The manufacturing method (M) includes steps (i) and (ii). Step (i) is a step of disposing an Mg-containing Li alloy (for example, an Li-Mg alloy foil) on a current collector. The Mg-containing Li alloy foil is a foil that will become the Mg-containing Li alloy layer. The current collector is the above-described current collector.

In step (ii), the current collector and the Mg-containing Li alloy foil are pressed to bond them together. Silicone oil or hydrocarbon oil is used as rolling oil at the time of manufacture of the Mg-containing Li alloy foil. In this step, it is preferable that no oil residue remains on the surface of the Mg-containing Li alloy foil, in order to ensure that the intermetallic compound is present appropriately.

The first of the useful means for leaving no oil residue is a method by which an Mg-containing Li alloy foil is manufactured using a highly volatile oil (volatile oil). Examples of the highly volatile oil include decane, dodecane, tridecane, tetradecane, pentadecane, hexadecane, and the like. The second of the useful means for leaving no oil residue is a method by which the oil residue is removed by vacuum drying the Mg-containing Li alloy foil before step (i). Vacuum drying can be performed by holding the Mg-containing Li alloy foil for a certain period of time under a vacuum atmosphere of 0.006 MPa (gauge pressure: -0.095 MPa) or less, for example. The first and second methods may be used in combination.

The manufacturing method (M) may include step (a) and/or step (b) before step (i). Step (a) is a step of manufacturing an Mg-containing Li alloy foil by rolling using a highly volatile oil. Step (b) is a step of vacuum-drying the Mg-containing Li alloy foil. In the case of performing both steps (a) and (b), step (b) is performed after step (a).

If the pressing pressure during compression bonding is high, deformation and wrinkles may occur in the resulting laminate (negative electrode (N)) when the Mg-containing Li alloy foil is pressed onto the current collector. Therefore, it is preferable to set the upper limit of the pressing pressure to a pressure at which deformation and wrinkles will not occur in the negative electrode (N). The pressing for compression bonding may be performed using a roll press with a linear pressure in the range of 9.8 N/cm to 490 N/cm.

After the current collector and the Mg-containing Li alloy foil are pressure-bonded, the resulting laminate (negative electrode (N)) can be held for a certain period of time in an inert atmosphere at 60°C or less (for example, in the range of 40°C to 60°C), thereby appropriately controlling the amount of the intermetallic compound. Specifically, the amount of the intermetallic compound tends to increase by extending the time for holding in an inert atmosphere at 60°C or less. Examples of the inert atmosphere include an argon gas atmosphere and a vacuum atmosphere of 0.006 MPa (gauge pressure: -0.095 MPa) or less. The holding time may be in the range of 1 to 72 hours.

Appropriately controlling the removal of the oil residue, the pressing pressure, and the holding conditions after pressing makes it possible to form an intermetallic compound (for example, a $Cu_2Mg$ layer) having a predetermined ratio Icm/Ic between the current collector and the Li-Mg alloy layer. Accordingly, the negative electrode (N) can be manufactured.

(Lithium Secondary Battery)

The lithium secondary battery according to the present disclosure may be referred to below as a "lithium secondary battery (B)" or a "secondary battery (B)". The secondary battery (B) includes a positive electrode, a negative electrode, a separator interposed between the positive electrode and the negative electrode, and a nonaqueous electrolyte. The negative electrode is the negative electrode (N) according to the present disclosure. In the negative electrode (N), lithium metal is deposited during charging, and the lithium metal dissolves during discharging. The negative electrode (N) has been described above, and thus redundant description thereof will be omitted.

In general, in a lithium secondary battery, lithium metal is deposited on a negative electrode during charging, and the deposited lithium metal dissolves in a nonaqueous electrolyte during discharging. In general, in a lithium secondary battery, a film is formed on the negative electrode during charging due to decomposition and/or reaction of components contained in the nonaqueous electrolyte. The film is called a solid electrolyte interphase (SEI) film. The SEI film is also formed on the surface of the deposited lithium metal. During charging, in the negative electrode, lithium metal is deposited and an SEI film is formed. Therefore, compared with lithium ion secondary batteries, the charging reaction of the lithium secondary battery is more likely to be ununiform, which may result in a decrease in capacity and deterioration in cycle characteristics. If the charging reaction locally occurs due to the SEI film, the lithium metal is deposited in the form of dendrites, which makes the negative electrode more likely to expand. If the negative electrode expands, the nonaqueous electrolyte will be pushed out of the positive electrode and the separator, reducing the lithium ion concentration and deteriorating cycle characteristics. In addition, if lithium metal is deposited in the form of dendrites, the specific surface area of the lithium metal will increase, which in turn increases a side reaction between the lithium metal and the electrolyte, resulting in significant deterioration in cycle characteristics.

On the other hand, since the negative electrode (N) of the secondary battery (B) contains magnesium, which has a higher standard electrode potential than lithium, it is considered that the reductive decomposition reaction of the nonaqueous electrolyte will be reduced, and the growth of the SEI film will be reduced. Therefore, in the secondary battery (B), the negative electrode (N) contains an Mg-containing Li alloy layer, which can reduce a deterioration in cycle characteristics due to the formation of the SEI film.

Furthermore, the negative electrode (N) of the secondary battery (B) contains the above-described intermetallic compound, which can particularly reduce a deterioration in cycle characteristics.

In the secondary battery (B), lithium in the positive electrode can be deposited as lithium metal on the negative electrode (N) during charging. The deposited lithium metal can dissolve in the nonaqueous electrolyte during discharging. Charging and discharging are carried out in this manner. When charging and discharging are repeated, the Mg-containing Li alloy layer can be utilized for charging and discharging.

The secondary battery (B) may include spacers (protrusions) formed on either the positive electrode or the separator. The use of the spacers can reduce volumetric changes in the electrode group, particularly reducing a deterioration in cycle characteristics. In the case of forming spacers on the positive electrode, the spacers are formed on one of both surfaces of the positive electrode that faces the negative electrode (N) via the separator. In the case of forming spacers on the separator, the spacers are usually formed on one surface of the separator.

The spacers have a convex shape. The spacers may be linear convex portions and/or dot-shaped convex portions. The material of the spacers are not particularly limited, and may be an insulating resin and/or an insulating inorganic material. The insulating resin can be an insulating resin that is less susceptible to deterioration in the secondary battery (B), and may be the insulating resin used in the separator. The spacers may be formed from a mixture of an insulating resin and an insulating inorganic material. Examples of the insulating resin material include polyethylene, polypropylene, polyethylene terephthalate, polyimide, polyamide, polyurethane, and the like. The insulating inorganic material can be an inorganic material that does not affect the characteristics of the secondary battery (B). Examples of the insulating inorganic material include $Al_2O_3$, $MgO$, $ZnO$, $ZrO_2$, $SiO_2$, $TiO_2$, and the like.

The width of the spacers may be 100 $\mu$m or more, or 500 $\mu$m or more, and may be 1000 $\mu$m or less, or 2000 $\mu$m or less. The height of the spacers may be 10 $\mu$m or more, or 20 $\mu$m or more, and may be 50 $\mu$m or less, or 100 $\mu$m or less. The spacers may include an insulating inorganic material and have a height of 10 $\mu$m or more.

The spacers can be formed in a predetermined pattern. For example, the spacers may have a mesh-like shape. Examples of the mesh-like shape include shapes of combined polygons, such as a honeycomb shape. The spacers may include a plurality of linear protrusions that extend in a stripe pattern. The spacers may also include a plurality of dot-like protrusions that are arranged at regular intervals.

The spacers can be formed by applying a spacer material to a predetermined member (a positive electrode or a separator). The method for applying the spacer material is not particularly limited, and the spacer material may be applied by screen printing or by a method using a dispenser.

The method for manufacturing the secondary battery (B) is not particularly limited as long as the negative electrode (N) is used, and the secondary battery (B) may also be manufactured using a known method. In one example of the manufacturing method, first, an electrode group is fabricated using a positive electrode, the negative electrode (N), and a separator. Next, the electrode group and a nonaqueous electrolyte are sealed in an outer casing. In this manner, the secondary battery (B) can be manufactured.

Examples of components of the secondary battery (B) will be described below. Components other than characteristic components of the secondary battery (B) of the present disclosure are not particularly limited, and any components used in known lithium secondary batteries may be applied.

(Negative Electrode)

The negative electrode is the above-described negative electrode (N). The shape of the negative electrode is selected depending on the form of the secondary battery (B). For example, if the secondary battery (B) is a cylindrical battery, a strip-shaped negative electrode can be used.

(Positive Electrode)

The positive electrode includes a positive electrode current collector and a positive electrode composite layer formed on the surface of the positive electrode current collector, for example. The positive electrode current collector may be provided in a sheet form (for example, foil or film) or may also be porous. The positive electrode composite layer may be formed on both main surfaces of the positive electrode current collector, or may also be formed on only one main surface. The positive electrode composite layer may be formed in a state where it is charged into a mesh-like positive electrode current collector.

Examples of materials for the positive electrode current collector include metal materials such as Al, Al alloy, Ti, Ti alloy, and Fe alloy. The Fe alloy may be stainless steel.

The positive electrode composite layer includes a positive electrode active material. In addition to the positive electrode active material, the positive electrode composite layer may include at least one selected from the group consisting of a binder, a conductive material, a thickener, and an additive. If necessary, a conductive carbonaceous material may be interposed between the positive electrode current collector and the positive electrode composite layer.

The positive electrode active material is a material that electrochemically absorbs and releases lithium ions. Examples of such a material include at least one selected from the group consisting of lithium-containing transition metal oxide, transition metal fluoride, polyanion, fluorinated polyanion, and transition metal sulfide. From the viewpoints of high average discharge voltage and cost advantage, the positive electrode active material may be a lithium-containing transition metal oxide.

Examples of transition metal elements contained in the lithium-containing transition metal oxide include Sc, Ti, V, Cr, Mn, Fe, Co, Ni, Cu, Y, Zr, W, and the like. The lithium-containing transition metal oxide may contain only one transition metal element or may also contain two or more transition metal elements. The transition metal element may be at least one selected from the group consisting of Co, Ni, and Mn. The lithium-containing transition metal oxide may contain one or more typical metal elements as necessary. Examples of the typical metal elements include Mg, Al, Ca, Zn, Ga, Ge, Sn, Sb, Pb, Bi, and the like. The typical metal element may be Al or the like.

Examples of the binder include fluororesin, polyacrylonitrile, polyimide resin, acrylic resin, polyolefin resin, rubber polymer, and the like. Examples of the fluororesin include polytetrafluoroethylene, polyvinylidene fluoride, and the like.

The conductive material may be a conductive carbonaceous material or the like, for example. Examples of the conductive carbonaceous material include carbon black, carbon nanotubes, graphite, and the like. Examples of the carbon black include acetylene black and ketjen black.

The thickener may be a cellulose derivative or the like such as cellulose ether, for example. Examples of the cellulose derivative include carboxymethyl cellulose (CMC) and its modified forms, methyl cellulose, and the like. Examples of the modified CMC include salts of CMC. Examples of the salts include alkali metal salts (for example, sodium salts), ammonium salts, and the like.

The carbonaceous material interposed between the positive electrode current collector and the positive electrode composite layer can be at least one selected from the conductive carbonaceous materials exemplified above as the conductive materials, for example.

The positive electrode can be obtained by applying or charging a slurry containing the components of a positive electrode composite layer and a dispersion medium to a positive electrode current collector, and then drying and compressing the coating film, for example. If necessary, a conductive carbonaceous material may be applied to the surface of the positive electrode current collector. The dispersion medium can be at least one selected from the group consisting of water and organic media (such as N-methyl-2-pyrrolidone).

(Separator)

The separator is a porous sheet having ion permeability and insulating properties. Examples of the form of the porous sheet include a microporous film, a woven fabric, a nonwoven fabric, and the like. The material of the separator may be a polymer material. Examples of the polymer material include an olefin resin, a polyamide resin, cellulose, and the like. Examples of the olefin resin include polyethylene, polypropylene, a copolymer of ethylene and propylene, and the like. The separator may contain additives as necessary. Examples of the additives include inorganic fillers.

The separator may include a plurality of layers that differ in at least one of form and composition. Such a separator may be a laminate of a polyethylene microporous film and a polypropylene microporous film, or a laminate of a nonwoven fabric containing cellulose fibers and a nonwoven fabric containing thermoplastic resin fibers.

(Nonaqueous Electrolyte)

The nonaqueous electrolyte (nonaqueous electrolyte solution) contains a solvent (nonaqueous solvent) and a solute dissolved in the solvent. Examples of the solute include lithium salts. Various additives may be added to the electrolyte solution.

A known material can be used as a solvent. As the solvent, for example, a cyclic carbonic acid ester, a chain carbonic acid ester, a cyclic carboxylic acid ester, a chain carboxylic acid ester, a chain ether, a fluorinated chain ether, a cyclic ether, a fluorinated cyclic ether, or the like can be used. Examples of the cyclic carbonic acid ester include propylene carbonate (PC), ethylene carbonate (EC), fluoroethylene carbonate (FEC), vinylene carbonate (VC), and the like. Examples of the chain carbonic acid ester include diethyl carbonate (DEC), ethyl methyl carbonate (EMC), dimethyl carbonate (DMC), and the like. Examples of the cyclic carboxylic acid ester include γ-butyrolactone (GBL) and γ-valerolactone (GVL). Examples of the chain carboxylic acid ester include nonaqueous solvents such as methyl acetate, ethyl acetate, propyl acetate, methyl propionate (MP), and ethyl propionate (EP). Examples of the chain ether include dimethyl ether, ethyl methyl ether, diethyl ether, ethyl propyl ether, dipropyl ether, diisopropyl ether, dibutyl ether, dihexyl ether, ethyl vinyl ether, butyl vinyl ether, methyl phenyl ether, ethyl phenyl ether, butyl phenyl ether, pentyl phenyl ether, methoxytoluene, benzyl ethyl ether, diphenyl ether, dibenzyl ether, o-dimethoxybenzene, 1,1-dimethoxymethane, and 1,1-diethoxyethane. The chain ether preferably includes at least a chain ether having two or more ether bonds. Examples of such a chain ether include 1,2-dimethoxyethane (DME), 1,2-diethoxyethane, 1,2-dibutoxyethane, diethylene glycol dimethyl ether, diethylene glycol diethyl ether, diethylene glycol ethyl methyl ether, diethylene glycol dibutyl ether, triethylene glycol dimethyl ether, triethylene glycol diethyl ether, triethylene glycol ethyl methyl ether, tetraethylene glycol dimethyl ether, tetraethylene glycol diethyl ether, and tetraethylene glycol ethyl methyl ether. Examples of the cyclic ether include 1,3-dioxolane, 4-methy-1,3-dioxolane, tetrahydrofuran, 2-methyltetrahydrofuran, propylene oxide, 1,2-butylene oxide, 1,3-dioxane, 1,4-dioxane, 1,3,5-trioxane, furan, 2-methylfuran, 1,8-cineole, and crown ether. The fluorinated chain ether has a structure in which one or more hydrogen atoms of the above chain ether are substituted by fluorine atoms. Examples of the fluorinated chain ether include bis(2,2,2-trifluoroethyl)ether, 1,1,2,2-tetrafluoroethyl 2,2,2-trifluoroethyl ether, and 1,1,2,2-tetrafluoroethyl 2,2,3,3-tetrafluoropropyl ether. The fluorinated cyclic ether has a structure in which one or more hydrogen atoms of the above cyclic ether are substituted by fluorine atoms. Examples of the fluorinated cyclic ether include 3,3,4,4-tetrafluorotetrahydrofuran. The nonaqueous solvents may be used alone or in combination of two or more.

Examples of lithium salts include lithium salts of chlorine-containing acids (such as $LiClO_4$, $LiAlCl_4$, and $LiBi_{10}Cl_{10}$), lithium salts of fluorine-containing acids (such as $LiPF_6$, $LiPF_2O_2$, $LiBF_4$, $LiSbF_6$, $LiAsF_6$, $LiCF_3SO_3$, and $LiCF_3CO_2$), lithium salts of fluorine-containing acid imides (such as $LiN(FSO_2)_2$, $LiN(CF_3SO_2)_2$, $LiN(CF_3SO_2)(FSO_2)$, $LiN(CF_3SO_2)(C_4F_9SO_2)$, and $LiN(C_2F_5SO_2)_2$), lithium halides (such as $LiCl$, $LiBr$, and $LiI$), and lithium salts containing oxalate complexes (such as $LiB(C_2O_4)_2$, $LiBF_2(C_2O_4)$, $LiPF_4(C_2O_4)$, and $LiPF_2(C_2O_4)_2$). These lithium salts may be used alone or in combination of two or more.

The concentration of a lithium salt in the electrolyte solution may be 1 mol/L or more and 5 mol/L or less, or 1 mol/L or more and 3 mol/L or less. An electrolyte solution having high ionic conductivity and appropriate viscosity can be obtained by setting the lithium salt concentration within the above range.

The electrolyte solution may contain an additive (e.g., a known additive). Examples of additives include 1,3-propanesultone, methyl benzene sulfonate, cyclohexylbenzene, biphenyl, diphenyl ether, and fluorobenzene.

(Shapes etc.)

The positive electrode, the negative electrode, and the separator constitute an electrode group. Examples of the electrode group include an electrode group (rolled-up type electrode group) obtained by rolling up the positive electrode and the negative electrode with the separator interposed between the positive electrode and the negative electrode. The electrode group may also be in a form other than a rolled-up type. For example, the electrode group may be an electrode group (stacked type electrode group) obtained by stacking the positive electrode and the negative electrode on each other with the separator interposed between the positive electrode and the negative electrode. The form of the lithium secondary battery (B) is not limited, and may be a cylinder, rectangle, coin, button, laminate, or the like. The lithium secondary battery (B) includes an exterior body corresponding to these forms. The exterior body accommodates the electrode group and a nonaqueous electrolyte. There is no particular limitation on the exterior body, and an exterior body similar to an exterior body of a known lithium secondary battery may also be used.

Hereinafter, examples of the lithium secondary battery (B) and the negative electrode (N) will be specifically described with reference to the drawings. However, the lithium secondary battery (B) and the negative electrode (N) are not limited to configurations shown in the drawings. Components other than those essential to the lithium secondary battery (B) and the negative electrode (N) may be omitted. The examples described below can be modified based on the above description. Also, items described below may be applied to the above embodiments.

(Embodiment 1)

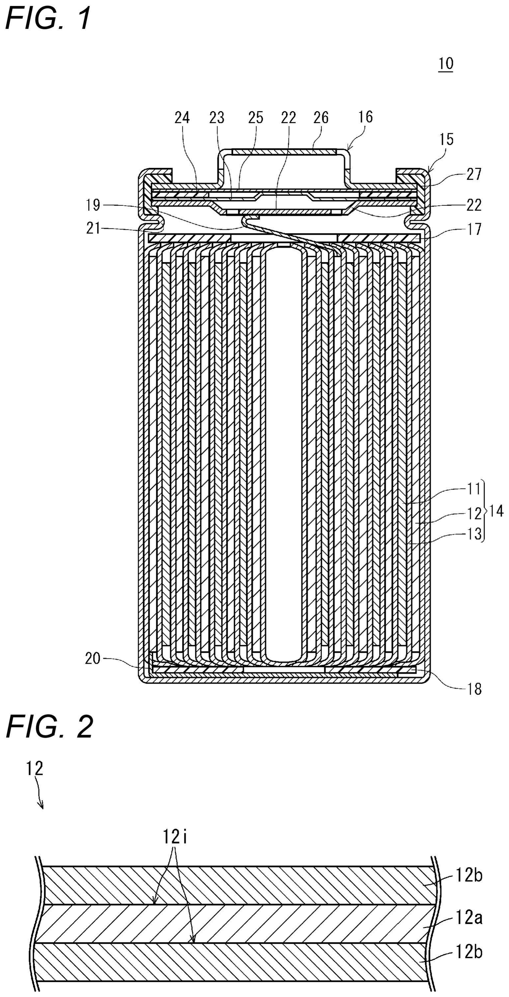

FIG. 1 is a longitudinal cross-sectional view schematically showing a lithium secondary battery 10 according to Embodiment 1. The lithium secondary battery 10 is a cylindrical battery. The lithium secondary battery 10 includes a cylindrical battery case, and a rolled-up type electrode group 14 and a nonaqueous electrolyte (not shown) that are accommodated in the battery case. The battery case includes a cylindrical case body 15 having a bottom, and a sealing body 16 that seals an opening of the case body 15. The case body 15 is made of metal. A gasket 27 is disposed between the case body 15 and the sealing body 16. The gasket 27 ensures the airtightness of the battery case. The case body 15, the sealing body 16, and the gasket 27 constitute an exterior body. In the case body 15, insulating plates 17 and 18 are disposed on both end portions in a rolling-up axial direction of the electrode group 14.

The case body 15 has a step portion 21. The sealing body 16 is supported by the step portion 21. The sealing body 16 includes a filter 22, a lower valve 23, an insulating member 24, an upper valve 25, and a cap 26. The above-described components that constitute the sealing body 16 are electrically connected to each other, except for the insulating member 24. The cap 26 functions as a positive electrode terminal. The case body 15 functions as a negative electrode terminal.

The electrode group 14 is a rolled-up type electrode group constituted by a positive electrode 11, a negative electrode 12, and separators 13. The positive electrode 11, the negative electrode 12, and the separators 13 are all band-shaped. The negative electrode 12 is the above-described negative electrode (N).

The positive electrode 11 is electrically connected to the cap 26 via a positive electrode lead 19. One end of the positive electrode lead 19 is connected to the positive electrode 11. The other end of the positive electrode lead 19 is connected to the sealing body 16 (filter 22). The negative electrode 12 is electrically connected to the case body 15 via a negative electrode lead 20. One end of the negative electrode lead 20 is connected to the negative electrode 12. The other end of the negative electrode lead 20 is connected to the case body 15.

FIG. 2 is a cross-sectional view schematically showing an example of the negative electrode 12. The negative electrode 12 includes a current collector (negative electrode current collector) 12a and Mg-containing Li alloy layers 12b formed on both surfaces of the current collector 12a. The above-described intermetallic compound (not shown) is present at an interface 12i between the current collector 12a and the Mg-containing Li alloy layers 12b.

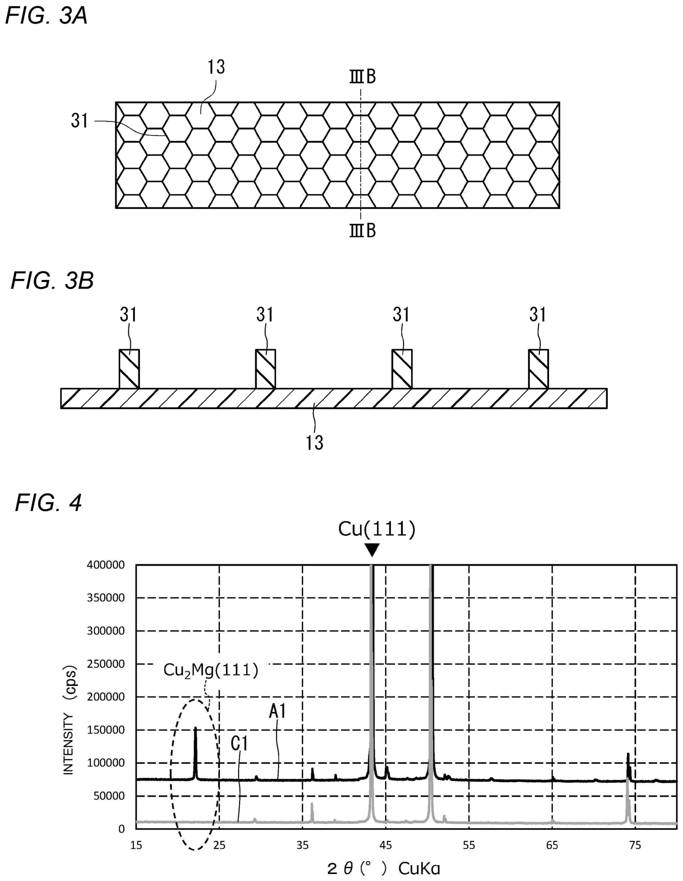

FIG. 3A is a top view of an example of a separator on which spacers are formed. FIG. 3B is a cross-sectional view taken along line IIIB-IIIB in FIG. 3A. In the example shown in FIG. 3A, spacers 31 are formed in a honeycomb shape on a separator 13. As shown in FIGS. 3A and 3B, the spacers 31 have linear protrusions.

(Additional Note)

The above description discloses the following technologies.

(Technology 1)

A negative electrode for a lithium secondary battery, including:

a current collector containing copper; and

a lithium alloy layer disposed on the current collector,

wherein the lithium alloy layer contains magnesium, and

an intermetallic compound of copper and magnesium is present at an interface between the current collector and the lithium alloy layer.

(Technique 2)

The negative electrode for a lithium secondary battery according to Technique 1, wherein the intermetallic compound is $Cu_2Mg$.

(Technique 3)

The negative electrode for a lithium secondary battery according to Technique 1 or 2, wherein, in an X-ray diffraction pattern obtained by X-ray diffraction analysis, a ratio $Icm/Ic$ of a peak intensity $Icm$ of (111) plane of the intermetallic compound to a peak intensity $Ic$ of (111) plane of Cu is in a range of 0.005 to 0.095.

(Technique 4)

The negative electrode for a lithium secondary battery according to any one of Techniques 1 to 3,

wherein the current collector includes a substrate and a metal layer disposed on the substrate,

the metal layer contains copper, and

the substrate is formed of stainless steel or a resin.

(Technique 5)

A lithium secondary battery including a positive electrode, a negative electrode, a separator interposed between the positive electrode and the negative electrode, and a nonaqueous electrolyte,

wherein the negative electrode is the negative electrode for a lithium secondary battery according to any one of Techniques 1 to 4, and

in the negative electrode, lithium metal is deposited during charging, and the lithium metal dissolves during discharging.

(Technique 6)

The lithium secondary battery according to Technique 5, further including a spacer formed on one of the positive electrode and the separator,
wherein the spacer has a height of 10 μm or more.

[Examples]

Hereinafter, the present disclosure will be described in more detail using examples. In these examples, a plurality of lithium secondary batteries were produced and evaluated using the following procedure.

(Production of Battery A1)

(1) Production of Positive Electrode

A positive electrode active material, acetylene black (conductive material), and polyvinylidene fluoride (binding material) were mixed in a mass ratio of 95 : 2.5 : 2.5 to obtain a mixture. A positive electrode slurry was prepared by adding an appropriate amount of N-methyl-2-pyrrolidone (dispersion medium) to the mixture and stirring the resulting mixture. A lithium-containing transition metal oxide containing Ni, Co, and A1 was used as the positive electrode active material.
A stacked body was formed by applying the positive electrode slurry to both surfaces of an aluminum foil (positive electrode current collector) and drying the positive electrode slurry. The stacked body was compressed in the thickness direction using a roller. The compressed stacked body was cut to a predetermined size. A positive electrode including the positive electrode current collector and positive electrode mixture layers formed on both surfaces of the positive electrode current collector was produced in this manner.

(2) Production of Negative Electrode

A negative electrode was produced by, in an inert gas atmosphere, pressure-bonding an Li-Mg alloy foil (with a thickness of 35 μm) to both surfaces of a copper foil (negative electrode current collector, with a thickness of 14 μm). The Li-Mg alloy foil was pressure-bonded to the surface of the copper foil under the conditions of step (ii) described above. Specifically, an Li-Mg alloy foil was first manufactured by rolling using a volatile oil (dodecane) as rolling oil. Next, the copper foil and two pieces of Li-Mg alloy foil were pressed together using a roll press at the linear pressure shown in Table 1, thereby pressure-bonding the copper foil and the Li-Mg alloy foil. The magnesium content of the Li-Mg alloy foil was set to the value shown in Table 1. The resulting laminate was held in an inert atmosphere at 40°C. In this manner, the negative electrode of the battery A1 was obtained.

(3) Preparation of Nonaqueous Electrolyte

A liquid nonaqueous electrolyte was prepared by dissolving $LiPF_6$ and $LiBF_2(C_2O_4)$ in a nonaqueous solvent. The concentrations of $LiPF_6$ and $LiBF_2(C_2O_4)$ in the nonaqueous electrolyte were respectively 1 mol/L and 0.1 mol/L. A mixture of propylene carbonate (PC) and 1,2-dimethoxyethane (DME) in a volume ratio of 1 : 2 was used as the nonaqueous solvent.

(4) Assembly of Battery

One end of the aluminum positive electrode lead was attached to the positive electrode current collector by welding. One end of the nickel negative electrode lead was attached to the negative electrode current collector by welding. A wound electrode group was fabricated by winding the positive and negative electrodes in an inert gas atmosphere such that the separator is interposed between the positive and negative electrodes. A polyethylene microporous film was used as the separator. Honeycomb-patterned spacers (with a height of about 30 μm) were formed on the separator.
Next, the electrode group was accommodated in an exterior body. A bag-shaped exterior body formed of a laminate having an Al layer was used as the exterior body. The nonaqueous electrolyte was injected into the exterior body, and the exterior body was then sealed. A battery A1 (lithium secondary battery) was assembled in this manner. Note that, when the electrode group was accommodated in the exterior body, the other end of the positive electrode lead and the other end of the negative electrode lead were exposed to the outside of the exterior body.

(Batteries A2 to A7 and Battery C1)

Negative electrodes were produced in the same manner and under the same conditions as those for the production of the negative electrode of the battery A1, except that the magnesium content of the Li-Mg alloy foil, the conditions for producing the Li-Mg alloy foil, and the conditions for press-bonding the current collector and the Li-Mg alloy foil were changed as shown in Table 1. Batteries A2 to A7 and battery C1 were produced in the same manner and under the same conditions as those for the production of the battery Al, except that the produced negative electrodes were used.

(Evaluation of Charge/Discharge Cycle Characteristics)

A charge/discharge cycle test was conducted on the produced lithium secondary batteries. Specifically, each of the lithium secondary batteries was charged in a thermostatic bath at 25°C under the following charging conditions, charging was stopped for 20 minutes (resting), and the battery was discharged under the following discharging conditions. A 50-charge/discharge cycle test was performed by repeating one cycle including the above charging, resting, and discharging 50 times.

(Charge)

The battery was charged at a constant current of 0.2C until the battery voltage reached 4.1 V, and then charged at a constant voltage of 4.1 V until the charging current reached 0.02C.

(Discharge)

The battery was discharged at a constant current of 0.2C until the battery voltage reached 3.0 V.
The changes in the capacity retention rate were evaluated by the above cycle test. The capacity retention rate was determined using the following equation by measuring a battery capacity E0 before the cycle test and a battery capacity E1 after the cycle test.

$$\text{The capacity retention rate } (\%) = 100 \times E1/E0$$

(Evaluation of Ratio Icm/Ic)

XRD analysis was performed on the negative electrodes used in the above batteries. Then, from the XRD patterns obtained by the XRD analysis, the ratio Icm/Ic of the peak intensity Icm of (111) plane of the $Cu_2Mg$ to the peak intensity Ic of (111) plane of Cu was determined. The XRD analysis was performed under the conditions described below. It is considered that in the XRD analysis, X-rays penetrate the Li-Mg alloy layer, making it possible to analyze the interface between the Li-Mg alloy layer and the current collector. A sample for measurement was prepared by fixing the negative electrode (N) to a sample holder. Specifically, first, a thin layer of clay was applied to a glass sample holder, and the negative electrode (N) was placed on top of it. Then, the negative electrode (N) was fixed to the sample holder by pressing it with a glass plate, whereby a sample for measurement was obtained.
As an XRD analyzer, a Miniflex 600 manufactured by Rigaku Holdings Corporation was used in an atmosphere kept at a dew point of - 60°C or less. The radiation source was a CuKα radiation source, the tube voltage was 40 kV, and the tube current was 15 mA. The sampling width was 0.02°, the scan speed was 10°/min, the divergence slit width was 0.625°, the receiving slit width was 13 mm (OPEN), and the scattering slit width was 8 mm. The obtained XRD pattern was fitted using a split Pseudo-Voigt function by the RIR method to identify Cu and $Cu_2Mg$ and calculate the peak intensities.
FIG. 4 shows the XRD patterns obtained by the XRD analysis of the negative electrodes of the battery Al and battery C1. As shown in FIG. 4, a peak from the (111) plane of $Cu_2Mg$ was observed in the negative electrode of the battery Al. This indicated that $Cu_2Mg$ was formed at the interface between the current collector and the Li-Mg alloy foil. On the other hand, no peak from the (111) plane of $Cu_2Mg$ (peak at 2θ of about 22°) was observed in the negative electrode of the battery C1.
Table 1 shows some of the production conditions for the negative electrodes of the batteries, along with the evaluation results. In the Li-Mg alloy foil production conditions in Table 1, "volatile oil" and "non-volatile oil" refer to the type of rolling oil used during production of the Li-Mg alloy foil. Silicone oil was used as the non-volatile oil. In the Li-Mg alloy foil production conditions in Table 1, "without vacuum drying" and "with vacuum drying" refer to whether the Li-Mg alloy foil was vacuum-dried before pressure-bonding to the copper foil. In the pressure-bonding conditions in Table 1, the linear pressure refers to the linear pressure used for pressure-bonding between the copper foil and the Li-Mg alloy foil. In the pressure-bonding conditions in Table 1, "with 40°C holding" and "without 40°C holding" refer to whether, after pressure-bonding between the copper foil and the Li-Mg alloy foil, the resulting laminate was held at 40°C in an inert atmosphere.

[Table 1]

| Battery | Mg content of Li-Mg alloy foil (mass%) | Li-Mg alloy foil production conditions | Press-bonding conditions | Ratio Icm/Ic | Capacity retention rate (%) |
|---|---|---|---|---|---|
| A1 | 1.0 | Volatile oil Without vacuum drying | Linear pressure of 98N/cm With 40°C holding | 0.0457 | 98.66 |
| A2 | 5.0 | Volatile oil Without vacuum drying | Linear pressure of 118N/cm Without 40°C holding | 0.0305 | 98.43 |
| A3 | 1.0 | Volatile oil Without vacuum drying | Linear pressure of 69N/cm With 40°C holding | 0.0191 | 97.86 |
| A4 | 5.0 | Volatile oil Without vacuum drying | Linear pressure of 88N/cm Without 40°C holding | 0.0086 | 97.46 |
| C1 | 10 | Non-volatile oil Without vacuum drying | Linear pressure of 98N/cm Without 40°C holding | 0 | 96.76 |
| A5 | 5.0 | Non-volatile oil With vacuum drying | Linear pressure of 78N/cm Without 40°C holding | 0.0007 | 97.34 |
| A6 | 10 | Non-volatile oil With vacuum drying | Linear pressure of 225N/cm Without 40°C holding | 0.0958 | 96.96 |
| A7 | 5.0 | Non-volatile oil With vacuum drying | Linear pressure of 176N/cm Without 40°C holding | 0.1037 | 97.28 |

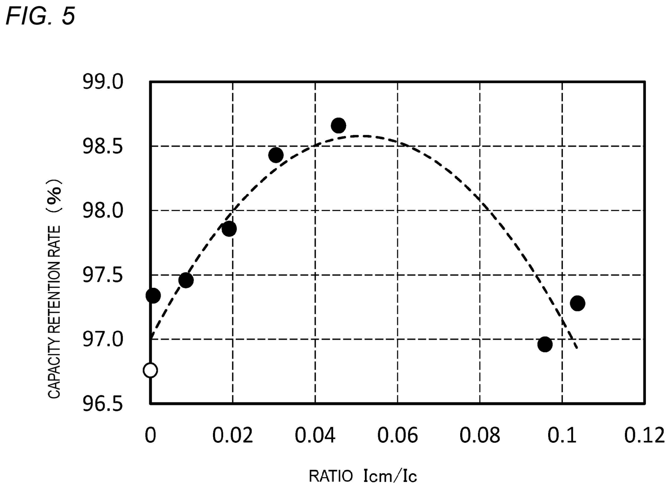

The batteries A1 to A7 are secondary batteries (B) according to the present disclosure, and the battery C1 is a comparative example. FIG. 5 shows the results in Table 1. As shown in Table 1 and FIG. 5, the battery C1 had a lower capacity retention rate than the batteries A1 to A7. As shown in FIG. 5, when the ratio Icm/Ic was in the range of 0.005 to 0.095, the decrease in the capacity retention rate was particularly suppressed. If the ratio Icm/Ic is too low, it is considered that the adhesion between the current collector and the Li-Mg alloy foil is reduced, resulting in a decrease in the capacity retention rate. On the other hand, if the ratio Icm/Ic is too high, it is considered that the resistance of the $Cu_2Mg$ layer is high, resulting in a decrease in the capacity retention rate.

[Industrial Applicability]

The present disclosure can be used for negative electrodes for lithium secondary batteries and lithium secondary batteries.
Although currently preferred embodiments of the present invention are described, the disclosure should not be construed as limiting the present invention. Various alterations and modifications will no doubt become apparent to those skilled in the art to which the present invention pertains, after having read the above disclosure. Accordingly, it is intended that the appended claims be interpreted as covering all alterations and modifications that fall within the true spirit and scope of the invention.

[Reference Signs List]

10: lithium secondary battery, 11: positive electrode, 12: negative electrode, 12a: current collector, 12b: Mg-containing Li alloy layer, 12i: interface, 13: separator, 31: spacer

**Claims**

1.　A negative electrode for a lithium secondary battery, comprising:

　　a current collector containing copper; and
　　a lithium alloy layer disposed on the current collector,

wherein the lithium alloy layer contains magnesium, and
an intermetallic compound of copper and magnesium is present at an interface between the current collector and the lithium alloy layer.

2. The negative electrode for a lithium secondary battery according to claim 1, wherein the intermetallic compound is $Cu_2Mg$.

3. The negative electrode for a lithium secondary battery according to claim 1 or 2, wherein, in an X-ray diffraction pattern obtained by X-ray diffraction analysis, a ratio Icm/Ic of a peak intensity Icm of (111) plane of the intermetallic compound to a peak intensity Ic of (111) plane of Cu is in a range of 0.005 to 0.095.

4. The negative electrode for a lithium secondary battery according to claim 1 or 2,

wherein the current collector includes a substrate and a metal layer disposed on the substrate,
the metal layer contains copper, and
the substrate is formed of stainless steel or a resin.

5. A lithium secondary battery comprising:

a positive electrode;
a negative electrode;
a separator interposed between the positive electrode and the negative electrode; and
a nonaqueous electrolyte,
wherein the negative electrode is the negative electrode for a lithium secondary battery according to claim 1, and
in the negative electrode, lithium metal is deposited during charging, and the lithium metal dissolves during discharging.

6. The lithium secondary battery according to claim 5, further comprising a spacer formed on one of the positive electrode and the separator,
wherein the spacer has a height of 10 $\mu$m or more.

## FIG. 1

## FIG. 2

FIG. 3A

FIG. 3B

FIG. 4

*FIG. 5*

## INTERNATIONAL SEARCH REPORT

| International application No. |
|---|
| **PCT/JP2024/015310** |

### A. CLASSIFICATION OF SUBJECT MATTER

*H01M 4/134*(2010.01)i; *H01M 4/40*(2006.01)i; *H01M 4/66*(2006.01)i; *H01M 10/052*(2010.01)i; *H01M 50/449*(2021.01)i;
*H01M 50/463*(2021.01)i
FI: H01M4/134; H01M4/40; H01M4/66 A; H01M10/052; H01M50/449; H01M50/463 B

According to International Patent Classification (IPC) or to both national classification and IPC

### B. FIELDS SEARCHED

Minimum documentation searched (classification system followed by classification symbols)

H01M4/134; H01M4/40; H01M4/66; H01M10/052; H01M50/449; H01M50/463

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| X | JP 9-245836 A (FUJI PHOTO FILM CO., LTD.) 19 September 1997 (1997-09-19) paragraph [0026] | 1-2, 5 |
| Y | | 4, 6 |
| A | | 3 |
| Y | JP 2008-135376 A (MATSUSHITA ELECTRIC INDUSTRIAL CO., LTD.) 12 June 2008 (2008-06-12) claims, paragraph [0152] | 4 |
| Y | JP 2004-253350 A (MATSUSHITA ELECTRIC INDUSTRIAL CO., LTD.) 09 September 2004 (2004-09-09) claims, paragraph [0057] | 4 |
| Y | WO 2022/224872 A1 (PANASONIC INTELLECTUAL PROPERTY MANAGEMENT CO., LTD.) 27 October 2022 (2022-10-27) claims, paragraph [0043], fig. 7 | 6 |

| ✓ Further documents are listed in the continuation of Box C. | ✓ See patent family annex. |
|---|---|

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "D" document cited by the applicant in the international application | "X" document of particular relevance; the claimed invention cannot be considered novel or cannot be considered to involve an inventive step when the document is taken alone |
| "E" earlier application or patent but published on or after the international filing date | |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| **03 July 2024** | **16 July 2024** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (July 2022)

**INTERNATIONAL SEARCH REPORT**

| International application No. |
| --- |
| **PCT/JP2024/015310** |

**C.    DOCUMENTS CONSIDERED TO BE RELEVANT**

| Category* | Citation of document, with indication, where appropriate, of the relevant passages | Relevant to claim No. |
| --- | --- | --- |
| Y | WO 2023/054150 A1 (PANASONIC INTELLECTUAL PROPERTY MANAGEMENT CO., LTD.) 06 April 2023 (2023-04-06)<br>    claims, paragraphs [0133]-[0134], fig. 3 | 6 |
| A | JP 2022-119159 A (KABUSHIKI KAISHA TOSHIBA) 16 August 2022 (2022-08-16) | 1-6 |
| A | WO 2022/138490 A1 (PANASONIC INTELLECTUAL PROPERTY MANAGEMENT CO., LTD.) 30 June 2022 (2022-06-30) | 1-6 |
| A | JP 2020-184513 A (TOYOTA JIDOSHA KABUSHIKI KAISHA) 12 November 2020 (2020-11-12) | 1-6 |

Form PCT/ISA/210 (second sheet) (July 2022)

## INTERNATIONAL SEARCH REPORT
### Information on patent family members

International application No.

**PCT/JP2024/015310**

| Patent document cited in search report | | | Publication date (day/month/year) | Patent family member(s) | | | Publication date (day/month/year) |
|---|---|---|---|---|---|---|---|
| JP | 9-245836 | A | 19 September 1997 | US | 5869208 | A | |
| | | | | column 10, lines 47-57 | | | |
| JP | 2008-135376 | A | 12 June 2008 | US | 2008/0102359 | A1 | |
| | | | | claims, paragraph [0206] | | | |
| | | | | CN | 101136466 | A | |
| | | | | KR | 10-2008-0037545 | A | |
| JP | 2004-253350 | A | 09 September 2004 | US | 2005/0284750 | A1 | |
| | | | | claims, paragraph [0252] | | | |
| | | | | WO | 2004/062003 | A1 | |
| | | | | EP | 1589597 | A1 | |
| | | | | KR | 10-2005-0092020 | A | |
| | | | | CN | 1732582 | A | |
| WO | 2022/224872 | A1 | 27 October 2022 | EP | 4329044 | A1 | |
| | | | | claims, paragraph [0043], fig. 7 | | | |
| | | | | CN | 117121262 | A | |
| WO | 2023/054150 | A1 | 06 April 2023 | (Family: none) | | | |
| JP | 2022-119159 | A | 16 August 2022 | US | 2022/0255133 | A1 | |
| WO | 2022/138490 | A1 | 30 June 2022 | EP | 4270543 | A1 | |
| | | | | CN | 116636038 | A | |
| JP | 2020-184513 | A | 12 November 2020 | US | 2020/0343583 | A1 | |
| | | | | CN | 111864182 | A | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2018063872 A

- JP 2014120399 A